# EUROPEAN PATENT SPECIFICATION

(11) **EP 2 464 192 B1**
(45) Date of publication and mention of the grant of the patent: **04.07.2018**
(21) Application number: 10805981.7
(22) Date of filing: 28.05.2010
(51) Int. Cl.: H04W 88/16, H04M 3/42, H04W 88/18, H04W 4/14, H04W 40/02

(54) **METHOD, EQUIPMENT AND SYSTEM FOR FORWARDING SHORT MESSAGE**
VERFAHREN, VORRICHTUNG UND SYSTEM ZUM WEITERLEITEN VON KURZNACHRICHTEN
PROCÉDÉ, ÉQUIPEMENT ET SYSTÈME PERMETTANT DE TRANSMETTRE UN MESSAGE COURT

(30) Priority: 04.08.2009 CN 200910161574
(43) Date of publication of application: 13.06.2012
(73) Proprietor: ZTE Corporation, Shenzhen City, Guangdong Province 518057 (CN)
(72) Inventor: LIN, Lang, Shenzhen City Guangdong Province 518057 (CN); RAN, Maoguo, Shenzhen City Guangdong Province 518057 (CN); CHEN, Xiaojia, Shenzhen City Guangdong Province 518057 (CN); LIU, Shijiao, Shenzhen City Guangdong Province 518057 (CN)
(74) Representative: Murgitroyd & Company
(86) International application number: PCT/CN2010/073362
(87) International publication number: WO 2011/015077

(56) References cited:
- EP-A1- 1 300 030
- WO-A1-01/56311
- CN-A- 101 022 575
- CN-A- 101 304 559
- KR-A- 20040 027 763
- KR-B1- 100 815 559
- US-A1- 2005 119 017

## Description

### Technical Field

The present invention relates to the field of short message service, and in particular, to a method, equipment and system for forwarding a short message under the signaling interworking specification (IR.75) of the international standard.

### Background of the Related Art

Roaming and signaling interworking are the key for the success of the GSM (Global System Mobile). The GSMA (Global System Mobile Alliance) has more than 600 operator members, and network interworking is usually realized between different operators by bilateral agreements. With the coming of 3G age, the diversity of services as well as the emergence of new access technologies, implementing network interworking by way of the bilateral agreement is less and less able to meet the service demand, and the expense for creating the bilateral relation is also an obstacle for some operators to carry out new international roaming services. The open interconnection project of GSMA is dedicated to regulate the interconnection and interworking between operators, and IR.75 is a document under the project, which comprises the standard for short message roaming.

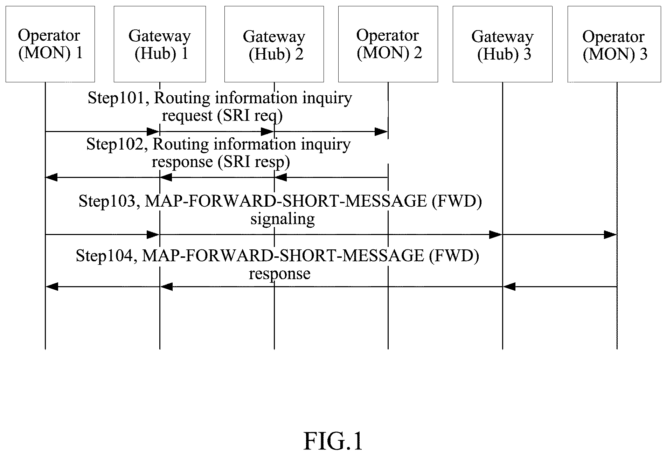

IR.75 defines a signaling interworking gateway (Hub) of different operator networks, which bears the function of short message roaming relay between operators, and the short message roaming flow is as show as in FIG.1, comprising the steps as follows:
step 101, when an operator MON1 needs to send a short message to a terminal under an operator MON2 which is now roaming under an operator MON3, it only needs to send a SRI req (MAP-SEND-ROUTING-INFO-FOR-SM request) to a signaling gateway Hub2 of the MON2 through the signaling interworking gateway Hub1 of MON1 to request for obtaining the address of the MSC (Mobile Switching Center) where the roaming terminal is presently located; after receiving the SRI req, Hub2 forwards the request to MON2;
step 102, MON2 returns a SRI resp (MAP-SEND-ROUTING-INFO-FOR-SM response) carrying the address of the MSC where the roaming terminal is presently located to the Hub2; the Hub2 forwards the SRI resp to Hub1, and Hub1 forwards the SRI resp to MON1;
step 103, MON1 sends a FWD req (MAP-FORWARD-SHORT-MESSAGE request) signaling to Hub1 according to address of the MSC where the roaming terminal is presently carried in the received SRI resp; Hub1 sends a FWD req carrying an extended parameter MON3 MSC/VLR GT, which is the address of the MSC where the roaming terminal is presently located, to the signaling gateway Hub3 of MON3, the Hub3forwards the FWD req to the MSC of the MON3 according to the address of the MSC carried in the extended parameter, and thereby the short message is sent to the roaming terminal;
step 104, MON3 sends a FWD resp (MAP-FORWARD-SHORT-MESSAGE response) to Hub3, Hub3 then sends the FWD resp to Hub1, and Hub1 forwards the FWD resp to MON1, and now the process of sending a short messages to the roaming terminal ends. It can bee seen from the above process that even having no routing information, Hub3 is still able to forward the short message to the MSC where the roaming terminal is presently located according to the extended parameters carried in the map-forward-short-message (FWD) signaling.

In the implementation of the above process of sending a short message to the roaming terminal, there exist the following problems:
under the MAPvlversion of GSM, the FWD signaling can not carry the extended parameter indicating the address of the MAC where the roaming terminal is located, in which case, if the Hub of the operator network where the roaming terminal is located has no routing information, the short message can not be sent to the roaming terminal which is roaming in another operator network.

The document WO0156311A1 discloses a method and a system for transmitting short messages between mobile communication systems. The system comprises a first and a second mobile communication system (MSN1 and MSN2) which are based on different mobile communications standards and combined by a gateway (GW). The mobile communication system is connected to a home location register (HLR) and a mobile services switching centre (MSC). In the method, the routing component is used to make the routing data inquiries addressed to a predetermined numerical space to the gateway (GW), and the short message is transmitted based on the address received in response to the aforementioned routing data inquiry to the gateway to be transmitted further to the second mobile communication system.

### Summary of the Invention

The invention provides a method, equipment and system for forwarding a short message to solve the problem that the short message can not be sent to the roaming terminal which is roaming in another operator network.

To solve the above technical problem, the invention provides a method for forwarding a short message, when a roaming terminal roams in a network under a destination gateway conforming to an international standard signaling interworking specification of MAPvl version, the method comprising:
the destination gateway receiving a routing information inquiry request for inquiring an address of a present MSC (Mobile Switching Center) of the roaming terminal sent by a source gateway, and inquiring of a destination HLR (Home Location Register) about the address of the present MSC of the roaming terminal;
the destination gateway sending a routing information inquiry response to the source gateway to instruct the source gateway to send the short message;
the destination gateway receiving the short message sent from the source gateway to the roaming terminal, and forwarding the short message to the MSC according to the address of the present MSC of the roaming terminal obtained by the inquiring.

Preferably, before the step of the destination gateway receiving a routing information inquiry request for inquiring an address of a present MSC of a roaming terminal sent by a source gateway, and inquiring of a destination HLR (Home Location Register) about the address of the present MSC of the roaming terminal, the method further comprises:
the destination gateway receiving an FWD (MAP-FORWARD-SHORT-MESSAGE) signaling sent by the source gateway carrying the short message sent towards the roaming terminal and the address of the present MSC of the roaming terminal;
the destination gateway sending a FWD failure response to the source gateway.

Preferably, after the step of the destination gateway receiving a routing information inquiry request for inquiring an address of a present MSC of a roaming terminal sent by a source gateway, and inquiring of a destination HLR (Home Location Register) about the address of the present MSC of the roaming terminal, the method further comprises:
if there is no information of the address of the present MSC of the roaming terminal in the destination HLR, inquiring of an attribution HLR of the roaming terminal about the address of the present MSC of the roaming terminal.

To solve the above technical problem, the invention provides a method for forwarding a short message, when a roaming terminal roams in a network under a destination gateway conforming to an international standard signaling interworking specification of MAPvl version, the method comprising:
when a source gateway needs to forward the short message to the roaming terminal, the source gateway sending a routing information inquiry request for inquiring an address of a present MSC (Mobile Switching Center) of the roaming terminal to the destination gateway;
the source gateway receiving a routing information inquiry response sent by the destination gateway, and forwarding the short message to the roaming terminal through the destination gateway.

Preferably, before the step of the source gateway sending a routing information inquiry request for inquiring an address of a present MSC (Mobile Switching Center) of the roaming terminal to the destination gateway, the method further comprises:
the source gateway sending a FWD (MAP-FORWARD-SHORT-MESSAGE) signaling carrying the short message and the address of the present MSC of the roaming terminal of the short message to the destination gateway;
the source gateway receiving a FWD failure response sent by the destination gateway, and determining that the destination gateway can not be directly notified of the address of the present MSC of the roaming terminal.

To solve the above technical problem, the invention provides a gateway conforming to an international standard signaling interworking specification of MAPvl version, the gateway comprising a MSC address inquiring module, an address inquiry responding module and a short message forwarding module:
the MSC address inquiring module is configured to receive a routing information inquiry request for inquiring an address of a present MSC (Mobile Switching Center) of the roaming terminal, and inquire of a destination HLR (Home Location Register) about the address of the present MSC of the roaming terminal;
the address inquiry responding module is configured to, according to an inquiring result of the MSC address inquiring module, send a routing information inquiry response to instruct a source gateway to send the short message;
the short message forwarding module is configured to receive the short message sent towards the roaming terminal, and forward the short message to the MSC through a destination gateway according to the address of the present MSC of the roaming terminal obtained by the inquiring of the MSC address inquiring module.

Preferably, the gateway further comprises:
an FWD (MAP-FORWARD-SHORT-MESSAGE) signaling processing module, which is configured to receive an FWD signaling, and return a FWD failure response if the FWD signaling carries an extended parameter;
the MSC address inquiring module is also configured to, when there is no information of the address of the present MSC of the roaming terminal in the destination HLR, inquire of an attribution HLR of the roaming terminal about the address of the present MSC of the roaming terminal.

To solve the above technical problem, the invention provides a gateway, when a roaming terminal roams in a network under an another gateway conforming to an international standard signaling interworking specification of MAPvl version, the gateway comprising a short message receiving module, an address inquiry requesting module and a short message forwarding module:
the short message receiving module is configured to receive a short message sent towards the roaming terminal;
the address inquiry requesting module is configured to, when the short message needs to be forwarded to the roaming terminal, send a routing information inquiry request for inquiring an address of a present MSC (Mobile Switching Center) of the roaming terminal;
the short message forwarding module is configured to receive a routing information inquiry response and forward the short message to the roaming terminal.

Preferably, the gateway further comprises:
an FWD (MAP-FORWARD-SHORT-MESSAGE) signaling processing module, which is configured to send an FWD signaling carrying the short message and the address of the present MSC of the roaming terminal of the short message, receive a FWD failure response, and after receiving the FWD failure response, instruct the address inquiry requesting module to send the routing information inquiry request for inquiring the address of the present MSC of the roaming terminal.

To solve the above technical problem, the invention provides a system for forwarding a short message, comprising a destination gateway and a source gateway, wherein, the destination gateway conforms to an international standard signaling interworking specification of MAPvl version;
the destination gateway is configured to receive a routing information inquiry request sent by the source gateway for inquiring an address of a present MSC (Mobile Switching Center) of the roaming terminal, inquire of a destination HLR (Home Location Register) about the address of the present MSC of the roaming terminal, and send a routing information inquiry response to the source gateway to instruct the source gateway to send the short message, receive the short message sent from the source gateway to the roaming terminal, and forward the short message to the MSC according to the address of the present MSC of the roaming terminal obtained by the inquiring;
the source gateway is configured to, when it needs to forward the short message to the roaming terminal, send the routing information inquiry request for inquiring the address of the present MSC of the roaming terminal to the destination gateway, receive the routing information inquiry response sent by the destination gateway, and forward the short message to the roaming terminal through the destination gateway.

By the method, equipment and system for forwarding a short message provided in the examples of the invention, when the source gateway needs to send the short message to the roaming terminal roaming under the destination gateway, the source gateway firstly sends a routing information inquiry request to the destination gateway, and the destination gateway inquires of the attribution HLR of the roaming terminal about the address of the present MSC of the roaming terminal according to the routing information inquiry request, and sends the short message to the roaming terminal according to the address, thus solving the problem that the short message can not be sent to the roaming terminal which is roaming in another operator network under MAPvl version of GSM.

### Brief Description of Drawings

FIG. 1 is a flowchart of the implementation of short message roaming between different operators;
FIG.2 is a flowchart of a method for forwarding a short message provided in an example of the invention;
FIG.3 illustrates the structure of a network system used in an example of the invention;
FIG.4 illustrates the structure of a gateway provided in an example of the invention;
FIG.5 illustrates the structure of another gateway provided in an example of the invention;
FIG.6 illustrates the structure of another gateway provided in an example of the invention;
FIG.7 illustrates the structure of another gateway provided in an example of the invention;
FIG.8 is a flowchart of a system for forwarding a short message provided in an example of the invention.

### Preferred Embodiments of the Present Invention

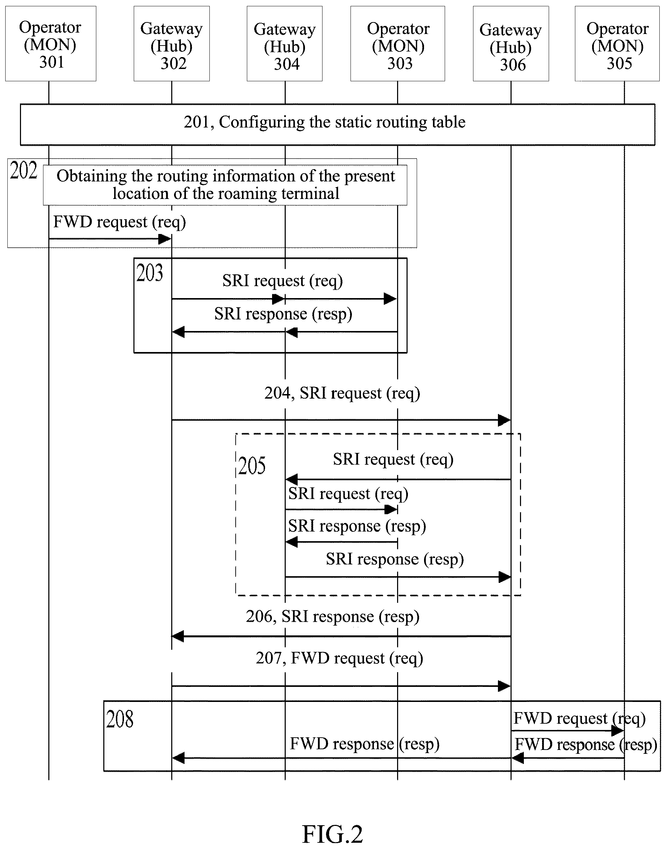

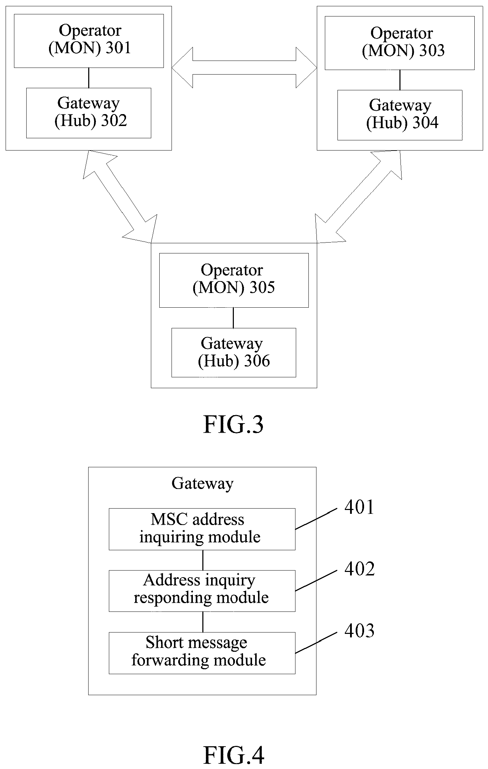

To solve the problem that the short message can not be sent to the roaming terminal which is roaming in another operator network under MAPvl version of GSM, the invention provides a method for forwarding a short message, and the process of sending a short messages to the roaming terminal by using the method is as shown in FIG.2, comprising:
step 201, configuring a static routing table in the gateway;
the network system used in the example of the invention is as show in FIG.3, which comprises the first operator MON301 and a Hub302 corresponding to the operator, the second operator MON302 and a Hub304 corresponding to the operator; the third operator MON305 and a Hub306 corresponding to the operator.

In the step, the static routing table is configured in Hub302, and the static routing table contains the addresses of the signaling interworking gateways of the second operator and the third operator and the types and version numbers of the protocols supported by the signaling interworking gateways.

In the example of the invention, the protocol supported by the third operator Hub306 is the MAPvl version of GSM.

step 202, the source network receiving a short message sent from a terminal in the local operator network to a roaming terminal;
in the step, the first operator MON301 firstly inquires of the attribution of the roaming terminal, i.e. the second operator MON33, about the present location of the roaming terminal through Hub302 (i.e. MON301 sends a SRI req to Hub 302), then sends to Hub302 the short message sent from the terminal in the local operator network to the roaming terminal in the second operator network, which is specifically to send the short message to Hub302 through FWD req carrying the identifier of the roaming terminal. The roaming terminal is currently roaming in the third operator network.

step 203, the source gateway inquiring of the attribution signaling interworking gateway of the roaming terminal about the present location of the roaming terminal;
in the step, Hub302 sending a SRI req to Hub304 to request for obtaining the present location of the roaming terminal.

Hub304 inquires of the attribution HLR (Home Location Register) of MON303 according to the SRI req to obtain the address of the MSC (Mobile Switching Center) where the roaming terminal is presently located, and returns the address of the MSC to Hub302 through a SRI resp.

The step usually may be performed after the first operator MON301 inquires of the attribution of the roaming terminal, i.e., the second operator MON303, about the present location of the roaming terminal through Hub302 (i.e. MON301 sends the SRI req to Hub302) and before MON301 sends the short message to Hub302 through FWD req, and only after the step 203 is finished, the operation of MON301 sending the short message to Hub 302 through FEW req in the step 202 is performed, i.e. the performing time for the step 202 and 203 may be partly overlapped.

step 204, the source gateway sending a routing information inquiry request for inquiring the address of the present MSC of the roaming terminal to the destination gateway of the MSC where the roaming terminal is presently located, and inquiring of the destination HLR about the address of the present MSC of the roaming terminal;
in the step, Hub302 gets to know that the roaming terminal is presently under the network of the third operator according to the address of the present MSC of the roaming terminal obtained in the step 203.

Hub302 knows, according to the static routing table configured in the step 201, that the protocol supported by the Hub306 of the third operator network is MAPvl version of GSM, so Hub306 can not receive the FWD signaling with the extended parameter comprising the MSC address information, and Hub302 could only send SRI req to Hub306 to trigger Hub306 to obtain the address of the MSC where the roaming terminal is presently located; in the SRI req, the identifier of the terminal is carried.

step 205, the destination gateway receiving the routing information inquiry request for inquiring the address of the present MSC of the roaming terminal sent by the original gateway and inquiring of the destination HLR about the address of the present MSC of the roaming terminal;
in the step, Hub306 receives the SRI req sent by Hub 302 in the step 204, and inquires of the HLR of the third operator network about the address information of the present MSC of the roaming terminal.

If the information of the roaming terminal is recorded in the HLR of the third operator, then Hub306 can directly obtain the present MSC of the roaming terminal in the HLR of the third operator network, and furthermore obtain the address of the MSC.

If there is no information of the roaming terminal recorded in the HLR of the third operator, Hub306 forwards the SRI req received in step 204 to the attribution of the roaming terminal, i.e. the HLR of the second operator network, and receives the SRI resp returned by the HLR of the second operator network, wherein, the SRI resp carries the address of the present MSC where the roaming terminal is presently located.

step 206, the destination gateway sending a routing information inquiry response to the source gateway to instruct the source gateway to send the short message;
in the step, Hub306 sends to Hub302 the SRI resp to indicate that the address of the MSC where the roaming terminal is presently located has been obtained and the short message is able to be forwarded to the roaming terminal.

step 207, the source gateway receiving the routing information inquiry response sent by the destination gateway and forwarding the short message to the roaming terminal;
in the step, Hub302 receives the SRI resp sent by Hub306 in the step 206, and sends the short message to Hub306 through FWD req signaling.

step 208, the destination gateway receiving the short message sent from the source gateway to the roaming terminal, and forwarding the short message to the MSC according to the address of the present MSC of the roaming terminal obtained by the inquiring;
in the step, Hub306 receives the FWD req sent by the Hub302, forwards the short message, according to the address of the present MSC of the roaming terminal obtained in the step 205, to the MSC, which sends the short message to the roaming terminal.

It needs to be explained that the step 201 in the example of the invention is an optional step, i.e. for the source gateway Hub302, the static routing table may not be configured in the source gateway. Since Hub302 does not know the type of the protocol of the destination gateway Hub306, Hub302 still firstly sends the FWD req carrying the extended parameter to Hub306 when sending the short message to Hub306, in which case, the destination gateway Hub306 can not receive the FWD req carrying the extended parameter and returns a FWD failure response, in which the protocol type used by Hub306 and the reason for failure in receiving the FED are declared, to the source gateway Hub302. Hub302 thus knows that Hub306 can not send messages directly according to the address carried in the extended parameter of the FWD signaling, and again sends the SRI req to Hub306 and enters into the step 204.

In addition, for the step 202, the operation of MON301 sending the short message to Hub302 may also be performed after the step 206, i.e. Hub 302 forwards the SRI resp to MON301 after receiving the SRI resp sent by Hub306 in the step 206, and then MON301 sends the short message to Hub302.

In the method for forwarding a short message provided in the example one of the invention, when a short message needs to be sent to the roaming terminal roaming under the destination gateway, a routing information inquiry request is firstly sent to the destination gateway, and the destination gateway inquires of the attribution HLR of the roaming terminal about the address of the MSC where the roaming terminal is presently located according to the routing information inquiry request, and sends the short message to the roaming terminal according to the address, thus solving the problem that the short message can not be sent to the roaming terminal which is roaming in another operator network under MAPvl version of GSM.

An example of the invention further provides a gateway, which serves as a destination gateway, wherein, in an international standard signaling interworking specification of MAPvl version, the structure of the gateway is as shown in FIG.4, comprising:
a MSC address inquiring module 401, which is configured to receive a routing information inquiry request for inquiring an address of a present MSC of the roaming terminal, and inquire of a destination HLR about the address of the present MSC of the roaming terminal;
an address inquiry responding module 402, which is configured to, according to an inquiring result of the MSC address inquiring module 401, send a routing information inquiry response to instruct a source gateway to send the short message;
a short message forwarding module 403, which is configured to receive the short message sent towards the roaming terminal, and forward the short message to the MSC according to the address of the present MSC of the roaming terminal obtained by the inquiring of the MSC address inquiring module 401.

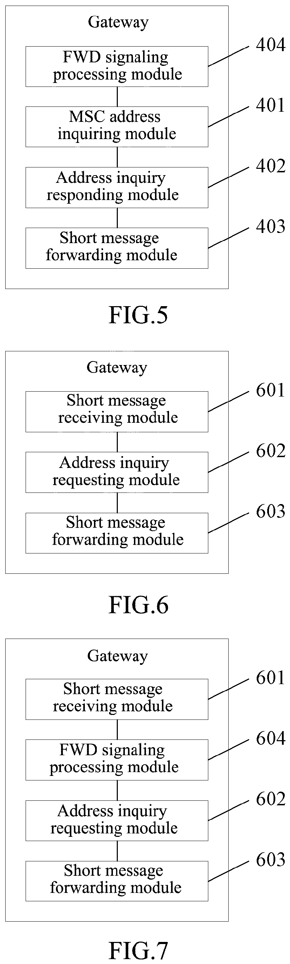

Furthermore, the above gateway is as shown in FIG.5, further comprising:
an FWD signaling processing module 404, which is configured to receive an FWD signaling, and return a FWD failure response if the FWD signaling carries an extended parameter;
the MSC address inquiring module 401 is also configured to, when there is no information of the address of the present MSC for the roaming terminal in the destination HLR, inquire of an attribution HLR of the roaming terminal about the address of the present MSC for the roaming terminal.

An example of the invention further provides a gateway, which serves as a source gateway, when a roaming terminal roams in a network under an another gateway conforming to an international standard signaling interworking specification of MAPv1 version, the structure of the gateway is as shown in FIG.6, comprising:
a short message receiving module 601, which is configured to receive a short message sent towards the roaming terminal;
an address inquiry requesting module 602, which is configured to, when the short message needs to be forwarded to the roaming terminal, send a routing information inquiry request for inquiring an address of a present MSC of the roaming terminal;
a short message forwarding module 603, which is configured to receive a routing information inquiry response and forward the short message to the roaming terminal.

Furthermore, the gateway is as shown in FIG.7, further comprising:
an FWD signaling processing module 604, which is configured to send an FWD signaling carrying the short message and the address of the present MSC of the roaming terminal for the short message, receive a FWD failure response, and after receiving the FWD failure response, instruct the address inquiry requesting module 602 to send the routing information inquiry request for inquiring the address of the present MSC of the roaming terminal.

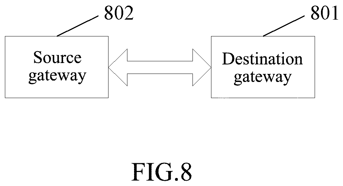

The invention further provides a system for forwarding a short message, which comprises, as shown in FIG.8, a destination gateway 801 and a source gateway 802, wherein, the destination gateway 801 conforms to an international standard signaling interworking specification of MAPvl version;
the destination gateway 801 is configured to receive a routing information inquiry request for inquiring an address of a present MSC of the roaming terminal sent by the source gateway 802, inquire of a destination HLR about the address of the present MSC of the roaming terminal, and send a routing information inquiry response to the source gateway 802 to instruct the source gateway 802 to send the short message, receive the short message sent from the source gateway 802 to the roaming terminal, and forward the short message to the MSC according to the address of the present MSC of the roaming terminal obtained by the inquiring;
the source gateway 802 is configured to, when it needs to forward the short message to the roaming terminal, send the routing information inquiry request for inquiring the address of the present MSC of the roaming terminal to the destination gateway 801, receive the routing information inquiry response sent by the destination gateway 801, and forward the short message to the roaming terminal.

The above gateways and system can be combined with the method for forwarding a short message provided in the example of the invention. When the short message is to be sent to the roaming terminal roaming under the destination gateway, a routing information inquiry request is firstly sent to the destination gateway, and the destination gateway inquires of the attribution HLR of the roaming terminal about the address of the MSC where the roaming terminal is presently located according to the routing information inquiry request, and sends the short message to the roaming terminal according to the address, thus solving the problem that the short message can not be sent to the roaming terminal which is roaming in another operator network under MAPvl version of GSM.

Those skilled in the art should understand that all or part of the steps for implementing the method in the above example may be completed by instructing associated hardwares through a program to, wherein, the program may be stored in a computer readable storage medium, and when the program is performed, one of the steps in the example of the method or the combination thereof is comprised.

In addition, each functional unit in each example of the invention may be implemented in the form of hardware, or be implemented in the form of software functional module. The integrated module may also be stored in a computer readable storage medium if the integrated module is implemented in the form of the software functional module and is sold or used as an independent product.

The above mentioned storage medium may be a read only memory, a disk or an optical disk and so on.

### Industrial Applicability

The invention provides a method, equipment and system for forwarding a short message. When the source gateway needs to send the short message to the roaming terminal roaming under the destination gateway, the source gateway firstly sends a routing information inquiry request to the destination gateway, and the destination gateway inquires of the attribution HLR of the roaming terminal about the address of the present MSC of the roaming terminal according to the routing information inquiry request, and sends the short message to the roaming terminal according to the address, thus solving the problem that the short message can not be sent to the roaming terminal which is roaming in another operator network under MAPvl version of GSM.

## Claims

1. A method for forwarding a short message, **characterized in that** when a roaming terminal roams in a network under a destination gateway conforming to an international standard signaling interworking specification of MAPvl version, the method comprises:
the destination gateway receiving a routing information inquiry request for inquiring an address of a present Mobile Switching Center, MSC, of the roaming terminal sent by a source gateway, and inquiring of a destination Home Location Register, HLR, about the address of the present MSC of the roaming terminal;
the destination gateway sending a routing information inquiry response to the source gateway to instruct the source gateway to send the short message;
the destination gateway receiving the short message sent from the source gateway to the roaming terminal, wherein, the short message is sent from the source gateway through an MAP-FORWARD-SHORT-MESSAGE, FWD, signaling; and the destination gateway forwarding the short message to the MSC according to the address of the present MSC of the roaming terminal obtained by the inquiring.

2. The method for forwarding a short message according to claim 1, wherein, before the step of the destination gateway receiving a routing information inquiry request for inquiring an address of a present MSC of a roaming terminal sent by a source gateway, and inquiring of a destination HLR about the address of the present MSC of the roaming terminal, the method further comprises:
the destination gateway receiving the FWD signaling carrying the short message sent towards the roaming terminal and the address of the present MSC of the roaming terminal sent by the source gateway;
the destination gateway sending a FWD failure response to the source gateway.

3. The method for forwarding a short message according to claim 1, wherein, after the step of the destination gateway receiving a routing information inquiry request for inquiring an address of a present MSC of a roaming terminal sent by a source gateway, and inquiring of a destination HLR about the address of the present MSC of the roaming terminal, the method further comprises:
if there is no information of the address of the present MSC of the roaming terminal in the destination HLR, inquiring of an attribution HLR of the roaming terminal about the address of the present MSC of the roaming terminal.

4. A method for forwarding a short message, **characterized in that** when a roaming terminal roams in a network under a destination gateway conforming to an international standard signaling interworking specification of MAPvl version, the method comprises:
when a source gateway needs to forward the short message to the roaming terminal, the source gateway sending a routing information inquiry request for inquiring an address of a present Mobile Switching Center, MSC, of the roaming terminal to the destination gateway;
the source gateway receiving a routing information inquiry response sent by the destination gateway, and forwarding the short message to the roaming terminal through the destination gateway; wherein, the short message is sent from the source gateway through an MAP-FORWARD-SHORT-MESSAGE, FWD, signaling.

5. The method for forwarding a short message according to claim 4, wherein, before the step of the source gateway sending a routing information inquiry request for inquiring an address of a present MSC of the roaming terminal to the destination gateway, the method further comprises:
the source gateway sending the FWD signaling carrying the short message and the address of the present MSC of the roaming terminal of the short message to the destination gateway;
the source gateway receiving a FWD failure response sent by the destination gateway, and determining that the destination gateway can not be directly notified of the address of the present MSC of the roaming terminal.

6. A gateway, **characterized in that** the gateway conforms to an international standard signaling interworking specification of MAPvl version, the gateway comprises a Mobile Switching Center, MSC, address inquiring module, an address inquiry responding module and a short message forwarding module:
the MSC address inquiring module is configured to receive a routing information inquiry request for inquiring an address of a present MSC of the roaming terminal, and inquire of a destination Home Location Register, HLR, about the address of the present MSC of the roaming terminal;
the address inquiry responding module is configured to, according to an inquiring result of the MSC address inquiring module, send a routing information inquiry response to instruct a source gateway to send the short message;
the short message forwarding module is configured to receive the short message sent towards the roaming terminal, wherein, the short message is sent from the source gateway through an MAP-FORWARD-SHORT-MESSAGE, FWD, signaling; and forward the short message to the MSC through a destination gateway according to the address of the present MSC of the roaming terminal obtained by the inquiring of the MSC address inquiring module.

7. The gateway according to claim 6, further comprising:
an FWD signaling processing module, which is configured to receive the FWD signaling, and return a FWD failure response if the FWD signaling carries an extended parameter;
the MSC address inquiring module is also configured to, when there is no information of the address of the present MSC of the roaming terminal in the destination HLR, inquire of an attribution HLR of the roaming terminal about the address of the present MSC of the roaming terminal.

8. A gateway, **characterized in that** when a roaming terminal roams in a network under an another gateway conforming to an international standard signaling interworking specification of MAPvl version, the gateway comprises a short message receiving module, an address inquiry requesting module and a short message forwarding module:
the short message receiving module is configured to receive a short message sent towards the roaming terminal; wherein, the short message is sent from said gateway through an MAP-FORWARD-SHORT-MESSAGE, FWD, signaling;
the address inquiry requesting module is configured to, when the short message needs to be forwarded to the roaming terminal, send a routing information inquiry request for inquiring an address of a present Mobile Switching Center, MSC, of the roaming terminal;
the short message forwarding module is configured to receive a routing information inquiry response and forward the short message to the roaming terminal.

9. The gateway according to claim 8, further comprising:
an FWD signaling processing module, which is configured to send the FWD signaling carrying the short message and the address of the present MSC of the roaming terminal of the short message, receive a FWD failure response, and after receiving the FWD failure response, instruct the address inquiry requesting module to send the routing information inquiry request for inquiring the address of the present MSC of the roaming terminal.

10. A system for forwarding a short message, **characterized by** comprising a destination gateway and a source gateway, wherein, the destination gateway conforms to an international standard signaling interworking specification of MAPvl version;
the destination gateway is configured to receive a routing information inquiry request sent by the source gateway for inquiring an address of a present Mobile Switching Center, MSC, of the roaming terminal, inquire of a destination Home Location Register, HLR, about the address of the present MSC of the roaming terminal, and send a routing information inquiry response to the source gateway to instruct the source gateway to send the short message, receive the short message sent from the source gateway to the roaming terminal, and forward the short message to the MSC according to the address of the present MSC of the roaming terminal obtained by the inquiring; wherein, the short message is sent from the source gateway through an MAP-FORWARD-SHORT-MESSAGE, FWD, signaling;
the source gateway is configured to, when it needs to forward the short message to the roaming terminal, send the routing information inquiry request for inquiring the address of the present MSC of the roaming terminal to the destination gateway, receive the routing information inquiry response sent by the destination gateway, and forward the short message to the roaming terminal through the destination gateway.

## Patentansprüche

1. Ein Verfahren für das Weiterleiten einer Kurznachricht, **dadurch gekennzeichnet, dass**, wenn eine Roaming-Endeinrichtung in einem Netzwerk unter einem Ziel-Gateway, das einer internationalen Normvorschrift für das Zusammenwirken von Signalisierungen der MAPv1-Version entspricht, ein Roaming ausführt, das Verfahren Folgendes beinhaltet:
Empfangen, durch das Ziel-Gateway, einer von einem Quellen-Gateway gesendeten Routinginformationsabfrage-Anforderung für das Abfragen einer Adresse einer vorhandenen Mobilfunkvermittlungsstelle (Mobile Switching Center, MSC) der Roaming-Endeinrichtung und Abfragen, von einem Ziel-Heimatortsregister (Home Location Register, HLR), der Adresse der vorhandenen MSC der Roaming-Endeinrichtung;
Senden, durch das Ziel-Gateway, einer Routinginformationsabfrage-Antwort an das Quellen-Gateway, um das Quellen-Gateway anzuweisen, die Kurznachricht zu senden;
Empfangen, durch das Ziel-Gateway, der von dem Quellen-Gateway an die Roaming-Endeinrichtung gesendeten Kurznachricht, wobei die Kurznachricht von dem Quellen-Gateway über eine MAP-KURZNACHRICHT-WEITERLEITEN(FORWARD-SHORT-MESSAGE, FWD)-Signalisierung gesendet wird; und Weiterleiten, durch das Ziel-Gateway, der Kurznachricht an die MSC gemäß der Adresse der vorhandenen MSC der Roaming-Endeinrichtung, die durch das Abfragen erhalten wurde.

2. Verfahren für das Weiterleiten einer Kurznachricht gemäß Anspruch 1, wobei das Verfahren vor dem Schritt des Empfangens, durch das Ziel-Gateway, einer von einem Quellen-Gateway gesendeten Routinginformationsabfrage-Anforderung für das Abfragen einer Adresse einer vorhandenen MSC einer Roaming-Endeinrichtung und des Abfragens, von einem Ziel-HLR, der Adresse der vorhandenen MSC der Roaming-Endeinrichtung ferner Folgendes beinhaltet:
Empfangen, durch das Ziel-Gateway, der von dem Quellen-Gateway gesendeten FWD-Signalisierung, die die an die Roaming-Endeinrichtung gesendete Kurznachricht und die Adresse der vorhandenen MSC der Roaming-Endeinrichtung trägt;
Senden, durch das Ziel-Gateway, einer FWD-Fehlschlagantwort an das Quellen-Gateway.

3. Verfahren für das Weiterleiten einer Kurznachricht gemäß Anspruch 1, wobei das Verfahren nach dem Schritt des Empfangens, durch das Ziel-Gateway, einer von einem Quellen-Gateway gesendeten Routinginformationsabfrage-Anforderung für das Abfragen einer Adresse einer vorhandenen MSC einer Roaming-Endeinrichtung und des Abfragens, von einem Ziel-HLR, der Adresse der vorhandenen MSC der Roaming-Endeinrichtung, ferner Folgendes beinhaltet:
falls es keine Informationen über die Adresse der vorhandenen MSC der Roaming-Endeinrichtung in dem Ziel-HLR gibt, Abfragen, von einem Zuordnungs-HLR der Roaming-Endeinrichtung, der Adresse der vorhandenen MSC der Roaming-Endeinrichtung.

4. Ein Verfahren für das Weiterleiten einer Kurznachricht, **dadurch gekennzeichnet, dass**, wenn eine Roaming-Endeinrichtung in einem Netzwerk unter einem Ziel-Gateway, das einer internationalen Normvorschrift für das Zusammenwirken von Signalisierungen der MAPv1-Version entspricht, ein Roaming ausführt, das Verfahren Folgendes beinhaltet:
wenn ein Quellen-Gateway die Kurznachricht an die Roaming-Endeinrichtung weiterleiten muss, Senden, durch das Quellen-Gateway, einer Routinginformationsabfrage-Anforderung für das Abfragen einer Adresse einer vorhandenen Mobilfunkvermittlungsstelle, MSC, der Roaming-Endeinrichtung an das Ziel-Gateway;
Empfangen, durch das Quellen-Gateway, einer von dem Ziel-Gateway gesendeten Routinginformationsabfrage-Antwort und Weiterleiten der Kurznachricht an die Roaming-Endeinrichtung über das Ziel-Gateway; wobei die Kurznachricht von dem Quellen-Gateway über eine MAP-KURZNACHRICHT-WEITERLEITEN-, FWD-Signalisierung gesendet wird.

5. Verfahren für das Weiterleiten einer Kurznachricht gemäß Anspruch 4, wobei das Verfahren vor dem Schritt des Sendens, durch das Quellen-Gateway, einer Routinginformationsabfrage-Anforderung für das Abfragen einer Adresse einer vorhandenen MSC der Roaming-Endeinrichtung an das Ziel-Gateway ferner Folgendes beinhaltet:
Senden, durch das Quellen-Gateway, der FWD-Signalisierung, die die Kurznachricht und die Adresse der vorhandenen MSC der Roaming-Endeinrichtung der Kurznachricht trägt, an das Ziel-Gateway;
Empfangen, durch das Quellen-Gateway, einer von dem Ziel-Gateway gesendeten FWD-Fehlschlagantwort und Bestimmen, dass das Ziel-Gateway nicht direkt über die Adresse der vorhandenen MSC der Roaming-Endeinrichtung benachrichtigt werden kann.

6. Ein Gateway, **dadurch gekennzeichnet, dass** das Gateway einer internationalen Normvorschrift für das Zusammenwirken von Signalisierungen der MAPv1-Version entspricht und das Gateway ein Mobilfunkvermittlungsstellen-, MSC-Adressabfragemodul, ein Adressabfrageantwortmodul und ein Kurznachrichtweiterleitungsmodul beinhaltet:
wobei das MSC-Adressabfragemodul konfiguriert ist, um eine Routinginformationsabfrage-Anforderung für das Abfragen einer Adresse einer vorhandenen MSC der Roaming-Endeinrichtung zu empfangen und von einem Ziel-Heimatortsregister, HLR, die Adresse der vorhandenen MSC der Roaming-Endeinrichtung abzufragen;
wobei das Adressabfrageantwortmodul konfiguriert ist, um gemäß einem Abfrageergebnis des MSC-Adressabfragemoduls eine Routinginformationsabfrage-Antwort zu senden, um ein Quellen-Gateway anzuweisen, die Kurznachricht zu senden;
wobei das Kurznachrichtweiterleitungsmodul konfiguriert ist, um die an die Roaming-Endeinrichtung gesendete Kurznachricht zu empfangen, wobei die Kurznachricht von dem Quellen-Gateway über eine MAP-KURZNACHRICHT-WEITERLEITEN-, FWD-Signalisierung gesendet wird; und die Kurznachricht über ein Ziel-Gateway gemäß der Adresse der vorhandenen MSC der Roaming-Endeinrichtung, die durch das Abfragen des MSC-Adressabfragemoduls erhalten wurde, an die MSC weiterzuleiten.

7. Gateway gemäß Anspruch 6, das ferner Folgendes beinhaltet:
ein FWD-Signalisierungsverarbeitungsmodul, das konfiguriert ist, um die FWD-Signalisierung zu empfangen und eine FWD-Fehlschlagantwort zurückzusenden, falls die FWD-Signalisierung einen erweiterten Parameter trägt;
wobei das MSC-Adressabfragemodul außerdem konfiguriert ist, um, wenn es keine Informationen über die Adresse der vorhandenen MSC der Roaming-Endeinrichtung in dem Ziel-HLR gibt, von einem Zuordnungs-HLR der Roaming-Endeinrichtung die Adresse der vorhandenen MSC der Roaming-Endeinrichtung abzufragen.

8. Ein Gateway, **dadurch gekennzeichnet, dass**, wenn eine Roaming-Endeinrichtung in einem Netzwerk unter einem anderen Gateway, das einer internationalen Normvorschrift für das Zusammenwirken von Signalisierungen der MAPv1-Version entspricht, ein Roaming ausführt, das Gateway ein Kurznachrichtempfangsmodul, ein Adressabfrageanforderungsmodul und ein Kurznachrichtweiterleitungsmodul beinhaltet:
wobei das Kurznachrichtempfangsmodul konfiguriert ist, um eine an die Roaming-Endeinrichtung gesendete Kurznachricht zu empfangen; wobei die Kurznachricht von dem Gateway über eine MAP-KURZNACHRICHT-WEITERLEITEN-, FWD-Signalisierung gesendet wird;
wobei das Adressabfrageanforderungsmodul konfiguriert ist, um, wenn die Kurznachricht an die Roaming-Endeinrichtung weitergeleitet werden muss, eine Routinginformationsabfrage-Anforderung für das Abfragen einer Adresse einer vorhandenen Mobilfunkvermittlungsstelle, MSC, der Roaming-Endeinrichtung zu senden;
wobei das Kurznachrichtweiterleitungsmodul konfiguriert ist, um eine Routinginformationsabfrage-Antwort zu empfangen und die Kurznachricht an die Roaming-Endeinrichtung weiterzuleiten.

9. Gateway gemäß Anspruch 8, das ferner Folgendes beinhaltet:
ein FWD-Signalisierungsverarbeitungsmodul, das konfiguriert ist, um die FWD-Signalisierung, die die Kurznachricht und die Adresse der vorhandenen MSC der Roaming-Endeinrichtung der Kurznachricht trägt, zu senden, eine FWD-Fehlschlagantwort zu empfangen, und, nach dem Empfangen der FWD-Fehlschlagantwort, das Adressabfrageanforderungsmodul anzuweisen, die Routinginformationsabfrage-Anforderung für das Abfragen der Adresse der vorhandenen MSC der Roaming-Endeinrichtung zu senden.

10. Ein System für das Weiterleiten einer Kurznachricht, **dadurch gekennzeichnet, dass** es ein Ziel-Gateway und ein Quellen-Gateway beinhaltet, wobei das Ziel-Gateway einer internationalen Normvorschrift für das Zusammenwirken von Signalisierungen der MAPv1-Version entspricht;
wobei das Ziel-Gateway konfiguriert ist, um eine von dem Quellen-Gateway gesendete Routinginformationsabfrage-Anforderung für das Abfragen einer Adresse einer vorhandenen Mobilfunkvermittlungsstelle, MSC, der Roaming-Endeinrichtung zu empfangen, von einem Ziel-Heimatortsregister, HLR, die Adresse der vorhandenen MSC der Roaming-Endeinrichtung abzufragen und eine Routinginformationsabfrage-Antwort an das Quellen-Gateway zu senden, um das Quellen-Gateway anzuweisen, die Kurznachricht zu senden, die von dem Quellen-Gateway an die Roaming-Endeinrichtung gesendete Kurznachricht zu empfangen und die Kurznachricht gemäß der Adresse der vorhandenen MSC der Roaming-Endeinrichtung, die durch das Abfragen erhalten wurde, an die MSC weiterzuleiten; wobei die Kurznachricht von dem Quellen-Gateway über eine MAP-KURZNACHRICHT-WEITERLEITEN-, FWD-Signalisierung gesendet wird;
wobei das Quellen-Gateway konfiguriert ist, um, wenn es die Kurznachricht an die Roaming-Endeinrichtung weiterleiten muss, die Routinginformationsabfrage-Anforderung für das Abfragen der Adresse der vorhandenen MSC der Roaming-Endeinrichtung an das Ziel-Gateway zu senden, die von dem Ziel-Gateway gesendete Routinginformationsabfrage-Antwort zu empfangen und die Kurznachricht über das Ziel-Gateway an die Roaming-Endeinrichtung weiterzuleiten.

## Revendications

1. Un procédé pour transférer un message court, **caractérisé en ce que** lorsqu'un terminal itinérant est en itinérance dans un réseau sous une passerelle de destination conforme à une spécification d'interfonctionnement de signalisation standard internationale de version MAPv1, le procédé comprend :
le fait pour la passerelle de destination de recevoir une requête de demande d'informations de routage pour demander une adresse d'un centre de commutation mobile, MSC, actuel du terminal itinérant envoyée par une passerelle source, et de demander à un enregistreur de localisation nominal, HLR, de destination des informations concernant l'adresse du MSC actuel du terminal itinérant ;
le fait pour la passerelle de destination d'envoyer une réponse à la demande d'informations de routage à la passerelle source pour donner l'instruction à la passerelle source d'envoyer le message court ;
le fait pour la passerelle de destination de recevoir le message court envoyé de la passerelle source au terminal itinérant, le message court étant envoyé de la passerelle source par le biais d'une signalisation MAP-FORWARD-SHORT-MESSAGE, FWD ; et
le fait pour la passerelle de destination de transférer le message court au MSC selon l'adresse du MSC actuel du terminal itinérant obtenue par la demande.

2. Le procédé pour transférer un message court selon la revendication 1, où, avant l'étape consistant pour la passerelle de destination à recevoir une requête de demande d'informations de routage pour demander une adresse d'un MSC actuel d'un terminal itinérant envoyée par une passerelle source, et à demander à un HLR de destination des informations concernant l'adresse du MSC actuel du terminal itinérant, le procédé comprend en outre :
le fait pour la passerelle de destination de recevoir la signalisation FWD portant le message court envoyé vers le terminal itinérant et l'adresse du MSC actuel du terminal itinérant envoyée par la passerelle source ;
le fait pour la passerelle de destination d'envoyer une réponse d'échec de FWD à la passerelle source.

3. Le procédé pour transférer un message court selon la revendication 1, où, après l'étape consistant pour la passerelle de destination à recevoir une requête de demande d'informations de routage pour demander une adresse d'un MSC actuel d'un terminal itinérant envoyée par une passerelle source, et à demander à un HLR de destination des informations concernant l'adresse du MSC actuel du terminal itinérant, le procédé comprend en outre :
s'il n'y a pas d'informations de l'adresse du MSC actuel du terminal itinérant dans le HLR de destination, le fait de demander à un HLR d'attribution du terminal itinérant des informations concernant l'adresse du MSC actuel du terminal itinérant.

4. Un procédé pour transférer un message court, **caractérisé en ce que** lorsqu'un terminal itinérant est en itinérance dans un réseau sous une passerelle de destination conforme à une spécification d'interfonctionnement de signalisation standard internationale de version MAPv1, le procédé comprend :
lorsqu'une passerelle source a besoin de transférer le message court au terminal itinérant, le fait pour la passerelle source d'envoyer une requête de demande d'informations de routage pour demander une adresse d'un centre de commutation mobile, MSC, actuel du terminal itinérant à la passerelle de destination ;
le fait pour la passerelle source de recevoir une réponse à la demande d'informations de routage envoyée par la passerelle de destination, et de transférer le message court au terminal itinérant par le biais de la passerelle de destination ; où le message court étant envoyé de la passerelle source par le biais d'une signalisation MAP-FORWARD-SHORT-MESSAGE, FWD.

5. Le procédé pour transférer un message court selon la revendication 4, où, avant l'étape consistant pour la passerelle source à envoyer une requête de demande d'informations de routage pour demander une adresse d'un MSC actuel du terminal itinérant à la passerelle de destination, le procédé comprend en outre :
le fait pour la passerelle source d'envoyer la signalisation FWD portant le message court et l'adresse du MSC actuel du terminal itinérant du message court à la passerelle de destination ;
le fait pour la passerelle source de recevoir une réponse d'échec de FWD envoyée par la passerelle de destination, et de déterminer que la passerelle de destination ne peut pas être directement notifiée de l'adresse du MSC actuel du terminal itinérant.

6. Une passerelle, **caractérisée en ce que** la passerelle est conforme à une spécification d'interfonctionnement de signalisation standard internationale de version MAPv1, la passerelle comprend un module de demande d'adresse de centre de commutation mobile, MSC, un module de réponse à la demande d'adresse et un module de transfert de message court :
le module de demande d'adresse de MSC est configuré pour recevoir une requête de demande d'informations de routage pour demander une adresse d'un MSC actuel du terminal itinérant, et pour demander à un enregistreur de localisation nominal, HLR, de destination des informations concernant l'adresse du MSC actuel du terminal itinérant ;
le module de réponse à la demande d'adresse est configuré pour, selon un résultat de demande du module de demande d'adresse de MSC, envoyer une réponse à la demande d'informations de routage pour donner l'instruction à une passerelle source d'envoyer le message court ;
le module de transfert de message court est configuré pour recevoir le message court envoyé vers le terminal itinérant, où le message court est envoyé de la passerelle source par le biais d'une signalisation MAP-FORWARD-SHORT-MESSAGE, FWD ; et
pour transférer le message court au MSC par le biais d'une passerelle de destination selon l'adresse du MSC actuel du terminal itinérant obtenue par la demande du module de demande d'adresse de MSC.

7. La passerelle selon la revendication 6, comprenant en outre :
un module de traitement de signalisation FWD, qui est configuré pour recevoir la signalisation FWD, et pour renvoyer une réponse d'échec de FWD si la signalisation FWD porte un paramètre étendu ;
le module de demande d'adresse de MSC est également configuré pour, lorsqu'il n'y a pas d'informations concernant l'adresse du MSC actuel du terminal itinérant dans le HLR de destination, demander à un HLR d'attribution du terminal itinérant des informations concernant l'adresse du MSC actuel du terminal itinérant.

8. Une passerelle, **caractérisée en ce que** lorsqu'un terminal itinérant est en itinérance dans un réseau sous une autre passerelle conforme à une spécification d'interfonctionnement de signalisation standard internationale de version MAPv1, la passerelle comprend un module de réception de message court, un module de requête de demande d'adresse et un module de transfert de message court :
le module de réception de message court est configuré pour recevoir un message court envoyé vers le terminal itinérant ; où le message court est envoyé de ladite passerelle par le biais d'une signalisation MAP-FORWARD-SHORT-MESSAGE, FWD ;
le module de requête de demande d'adresse est configuré pour, lorsque le message court a besoin d'être transféré au terminal itinérant, envoyer une requête de demande d'informations de routage pour demander une adresse d'un centre de commutation mobile, MSC, actuel du terminal itinérant ;
le module de transfert de message court est configuré pour recevoir une réponse à la demande d'informations de routage et pour transférer le message court au terminal itinérant.

9. La passerelle selon la revendication 8, comprenant en outre :
un module de traitement de signalisation FWD, qui est configuré pour envoyer la signalisation FWD portant le message court et l'adresse du MSC actuel du terminal itinérant du message court, recevoir une réponse d'échec de FWD, et après réception de la réponse d'échec de FWD, donner l'instruction au module de requête de demande d'adresse d'envoyer la requête de demande d'informations de routage pour demander l'adresse du MSC actuel du terminal itinérant.

10. Un système pour transférer un message court, **caractérisé par** le fait de comprendre une passerelle de destination et une passerelle source, la passerelle de destination étant conforme à une spécification d'interfonctionnement de signalisation standard internationale de version MAPv1 ;
la passerelle de destination est configurée pour recevoir une requête de demande d'informations de routage envoyée par la passerelle source pour demander une adresse d'un centre de commutation mobile, MSC, actuel du terminal itinérant, demander à un enregistreur de localisation nominal, HLR, de destination des informations concernant l'adresse du MSC actuel du terminal itinérant, et envoyer une réponse à la demande d'informations de routage à la passerelle source pour donner l'instruction à la passerelle source d'envoyer le message court, recevoir le message court envoyé de la passerelle source au terminal itinérant, et transférer le message court au MSC selon l'adresse du MSC actuel du terminal itinérant obtenue par la demande ; le message court étant envoyé de la passerelle source par le biais d'une signalisation MAP-FORWARD-SHORT-MESSAGE, FWD ;
la passerelle source est configurée pour, lorsqu'elle a besoin d'envoyer le message court au terminal itinérant, envoyer la requête de demande d'informations de routage pour demander l'adresse du MSC actuel du terminal itinérant à la passerelle de destination, recevoir la réponse à la demande d'informations de routage envoyée par la passerelle de destination, et transférer le message court au terminal itinérant par le biais de la passerelle de destination.
